# EUROPEAN PATENT APPLICATION

(11) **EP 1 863 284 A2**
(43) Date of publication of application: **05.12.2007**
(21) Application number: 07108791.0
(22) Date of filing: 23.05.2007
(51) Int. Cl.: H04N 7/10

(54) **Cable broadcast receiver, method for interfacing in-band channel,and method for processing broadcast signal**

(30) Priority: 01.06.2006 KR 20060049244
(71) Applicant: LG Electronics Inc., Seoul 150-721 (KR)
(72) Inventor: Hwang, Sun Ho, 151-812, SEOUL (KR)
(74) Representative: Cabinet Plasseraud

(57) **Abstract**

A cable broadcast receiver, an in-band channel interface method, and a broadcast signal processing method are disclosed. The method for interfacing an in-band channel includes: requesting a tuning of an in-band channel; receiving data of the in-band channel tuned/demodulated by the request, and specific information indicating the presence or absence of validity of the in-band channel data; and performing a decoding process, if the demodulated data is valid by referring to the specific information indicating the validity.

## Description

This application claims the benefit of Korean Patent Application No. 10-2006-0049244, filed on June 1, 2006, which is hereby incorporated by reference as if fully set forth herein.

### BACKGROUND

### Field of the Disclosure

The present disclosure relates to a cable broadcast receiver, and a method for interfacing an in-band channel, and a method for processing broadcast signals.

### Discussion of the Related Art

Generally, a cable broadcast system includes a cable headend acting as a transmitter for transmitting cable broadcast signals and a cable broadcast receiver for receiving the cable broadcast signals.

The cable headend is called a System Operation (SO) headend or a Multiple System Operator (MSO) headend. The cable broadcast receiver uses an open cable scheme for separating a cable card including a Conditional Access (CA) system from a main body. The cable card is called a Point Of Deployment (POD) module, and can be detachably connected to a slot of the main body of the cable broadcast receiver. The main body in which the cable card is inserted is called a host. In other words, the set of the cable card and the host is called a cable broadcast receiver.

Presently, the United States of America has established the standard of the digital cable broadcast receiver as the Open Cable scheme. Presently, the above-mentioned Open Cable scheme is being set to the standard of the digital cable broadcast receiver in the Republic of Korea.

The Open Cable Scheme of the United States of America has been developed by the Cable Labs Inc. The Open Cable scheme of the United States of America uses a QAM scheme as a modulation scheme, uses an MPEG2 scheme as a video compression and multiplexing scheme, uses a Dolby AC-3 as an audio compression scheme, and uses a Cable card acting as the POD module as a security module interface. A bi-directional communication of data (e.g., broadcast data, SMS messages, service messages, and authentication messages) is provided between a cable headend and a subscriber digital terminal (i.e., settop box), the subscriber can easily use content data (e.g., entertainment-, home-shopping-, and other information, etc.) of the digital cable broadcast.

Therefore, although the digital cable broadcast has a variety of general standards for the bi-directional communication between the cable headend and the subscriber digital terminal, many developers are conducting intensive research into a method for processing the settop box and its cable card to provide the subscriber with more superior services.

The cable broadcast receiver is connected to the cable headend indicative of a broadcast station capable of transmitting digital cable programs. The headend transmits A/V (Audio/Video) broadcast programs to the cable broadcast receiver via an In-Band area from among a cable broadcast frequency band, and transmits a variety of data via the Out Of Band (OOB).

The cable card of the cable broadcast receiver can be configured in the form of firmware by data received from the headend. In this case, the firmware upgrade is executed for the backup of either a flash memory of the cable card or a RAM battery. The firmware upgrade of the cable card is executed via two schemes, i.e., a first scheme based on the QAM in-band channel of the cable network connected to the headend and a second scheme based on the QPSK OOB- channel or QPSK DSG- channel.

The firmware upgrade according to the present invention is based on the first scheme based on the QAM in-band channel for the convenience of description.

The above-mentioned method for upgrading the firmware of the cable card over the in-band channel has a disadvantage in that it performs unnecessary operations between the host and the cable card under a non-signal channel or weak-signal channel condition, such that it must perform unnecessary operations between the host and the cable card, irrespective of the tuned in-band channel status.

### SUMMARY

Accordingly, the present application is directed to a cable broadcast receiver, a method for interfacing an in-band channel, and a method for processing a broadcast signal, that substantially obviate one or more problems due to limitations and disadvantages of the related art.

This disclosure is to provide a cable broadcast receiver, a method for interfacing an in-band channel, and a method for processing a broadcast signal, which enable a host to include specific information indicating the presence or absence of validity of tuned in-band channel data in a transmission message, thereby reducing the number of unnecessary operations of invalid channels of the cable card.

Additional advantages, objects, and features of the invention will be set forth in part in the description which follows and in part will become apparent to those having ordinary skill in the art upon examination of the following or may be learned from practice of this application. The objectives and other advantages of the implementation may be realized and attained by the structure particularly pointed out in the written description and claims hereof as well as the appended drawings.

As embodied and broadly described herein, a method for interfacing an in-band channel comprising: requesting a tuning of an in-band channel; receiving data of the in-band channel tuned/demodulated by the request, and specific information indicating the presence or absence of validity of the in-band channel data; and performing a decoding process, if the demodulated data is valid by referring to the specific information indicating the validity.

For example, the method further comprises: requesting a tuning of the next in-band channel instead of the error correction decoding, if the demodulated data is invalid by referring to the specific information.

For example, the method further comprises: upgrading firmware using the decoded data.

In another aspect of the implementation, there is provided a method for interfacing an in-band channel comprising: receiving a tuning request of an in-band channel; tuning/demodulating the in-band channel according to the tuning request; and transmitting data of the demodulated in-band channel and specific information indicating the presence or absence of validity of the demodulated in-band channel data.

For example, the specific information indicating the presence or absence of the demodulated in-band channel data is contained in an in-band channel response message, and is then transmitted.

For example, the in-band channel is demodulated by a Quadrature Amplitude Modulation (QAM) scheme.

For example, the in-band channel response message, if the demodulated in-band channel data is in a sync lock status, displays the demodulated in-band channel data as valid data, or the in-band channel response message, if the demodulated in-band channel data is in a sync unlock status, displays the demodulated in-band channel data as invalid data.

In another aspect of the implementation, there is provided a method for interfacing an in-band channel comprising: requesting, by a cable card, a tuning of an in-band channel from a host; tuning/demodulating, by the host, the requested Forward Data Channel (FDC), and transmitting the demodulated data and specific information indicating the present invention or absence of validity of the data to the cable card; and if the demodulated data is valid data on the basis of the specific information indicating the presence or absence of the validity, performing a decoding process by the cable card.

For example, the cable card, if the in-band channel data is invalid, does not perform the decoding process, and requests a tuning of the next in-band channel from the host.

In yet another aspect of the implementation, there is provided a broadcast receiver comprising: a cable card for requesting a tuning of an in-band channel, performing a decoding process if data of the in-band channel tuned/demodulated by the request is valid, and requesting a tuning of the next in-band channel if data of the in-band channel tuned/demodulated by the request is invalid; and a host for performing tuning/demodulating operations of a corresponding in-band channel upon receiving the request from the cable card, and transmitting specific information indicating the presence or absence of the demodulated data to the cable card along with the in-band channel data.

For example, the host includes a demodulator for demodulating the tuned in-band channel data using a Quadrature Amplitude Modulation (QAM) scheme.

For example, the host includes specific information indicating the presence or absence of validity of the demodulated data in an in-band channel response message, and transmits the in-band channel response message including the specific information to the cable card.

For example, the cable card upgrades firmware using the decoded data.

In yet another aspect of the implementation, there is provided a method for processing a broadcast signal comprising: a) tuning an in-band channel; b) determining the presence or absence of data validity of the tuned in-band channel; c) generating a field for indicating the presence or absence of the data validity; and d) transmitting a response message including the generated field.

For example, the step b) for determining the presence or absence of the data validity includes: if the tuned in-band channel data is in a sync lock status, displaying the in-band channel data as valid data; and if the tuned in-band channel data is in a sync unlock status, displaying the in-band channel data as invalid data.

For example, the data validity of the in-band channel is displayed on a tune status field.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of this disclosure and are incorporated in and constitute a part of this application, illustrate implementation and together with the description serve to explain the principle of the application. In the drawings:

FIG. 1 is a diagram illustrating an in-band channel request message and an in-band channel response message between a cable card and a host in broadcast receiver;

FIG. 2 is a table illustrating a variety of values contained in the "tune-status" field of an in-band channel status response message;

FIGS. 3A ~ 3B are flow charts illustrating a method for interfacing an in-band channel of a broadcast receiver;

FIG. 4 is a block diagram illustrating a broadcast receiver for interfacing data with an in-band channel of a broadcast receiver; and

FIG. 5 is a flow chart illustrating a method for processing a broadcast signal according to one implementation.

### DETAILED DESCRIPTION

Reference will now be made in detail to the preferred implementation of the present application, examples of which are illustrated in the accompanying drawings. Wherever possible, the same reference numbers will be used throughout the drawings to refer to the same or like parts.

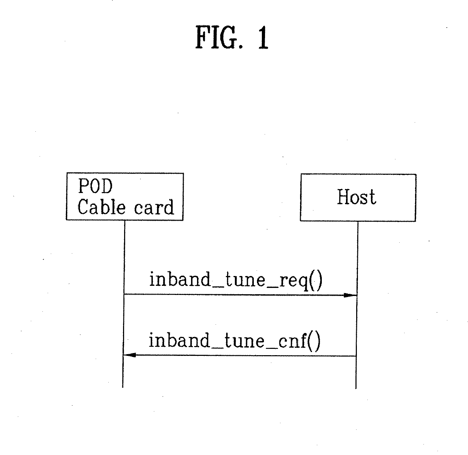

FIG. 1 is a diagram illustrating an in-band channel request message and an in-band channel response message between a cable card and a host in a broadcast receiver.

Referring to FIG. 1, the cable headend non-periodically transmits a signal for upgrading cable card firmware to a destination. In this case, the cable broadcast receiver for receiving/reproducing digital broadcast data receives a homing signal required for upgrading the cable card firmware.

Individual cable headends have different cable cards. The cable card receives the homing signal from the cable headend, and upgrades the firmware. The homing signal includes a variety of information (e.g., firmware upgrade messages, homing times, and firmware upgrade data of the cable card) received from the cable headend.

The cable-card firmware upgrade method of the cable network based on the QAM in-band channel according to the present invention is a "Delayed Upgrade" method. In order to perform the Delayed Upgrade method, the host must inform the cable card of an upgrade standby mode. If the host is in the standby mode for a long period of time or detects a memory including a corrupted OS boot loader, the host must immediately perform the upgrade operation.

In other words, a channel request message "inband_tune_req()APDU Syntax" for enabling the cable card to transmit a diagnosis request of the in-band channel status to the host is shown in the following Table 1:

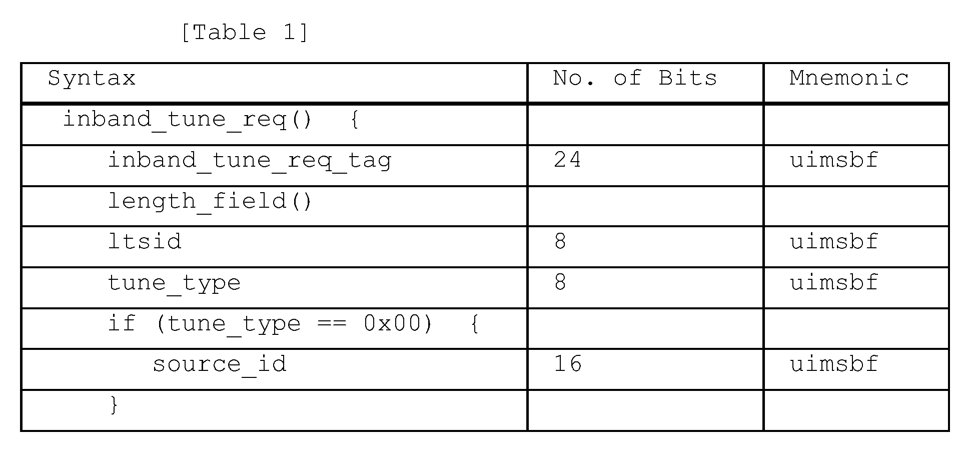

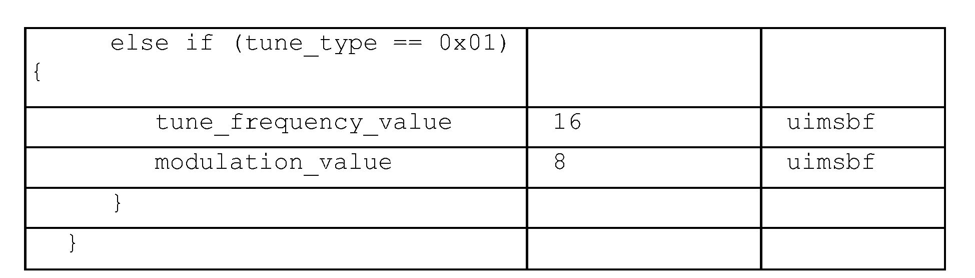

With reference to Table 1, 24 bits are assigned to the "inband_tune_req_tag" field, for example, "0×9F8408" may be assigned to the "inband_tune_req_tag" field.

The "ltsid" field including the Local Transport Stream ID classifies a data stream, and is assigned with 8 bits. The "tune_type" field determines any one of the source ID, a frequency, and a modulation value to be a specific value capable of discriminating the tuning reference of the requested in-band channel. The "tune_type" field is indicated by "00 Source ID", "01 Frequency", and "02~0xFF Reserved" values.

For example, if the "tune_type" field is set to "0x00", the "source_id" value is defined as unassigned integer values from "0x0000 to "0xFFFF", each of which has 16 bits for indicating programming sources associated with a virtual channel of a wider area of a system.

The term "source" indicates detailed resources, for example, video, text, data, or audio programming, etc. Each program source includes a unique "source_id" value in order to recommend a virtual channel to a program guide database (DB). The "source_id" field is denoted by a multiple interactive program guide (IPG) database, such that it further includes detailed service items.

If the "tune_type" field is set to "0x01", the "Tune_frequency_value" indicates a frequency tuned by the host. In this case, the frequency is calculated by multiplying the "Tune_frequency_value" by "0*0.05MHz (50kHz resolution)". If "tune_type" field is set to "0x01", the modulation_value is set to "0×00 64QAM", "0×01 256QAM", and "O×02~0×FF Reserved" values according to modulation types of the in-band tuner.

Upon receiving the in-band channel request from the cable card as shown in Table 1, the host tunes the received in-band channel, and determines the presence or absence of the tuned in-ban channel data. Thereafter, the host transmits specific information indicating the present invention or absence of the tuned in-band channel data to the cable card.

In this case, the "inband_tune_ cnf() APDU Syntax" message is shown in the following Table 2:

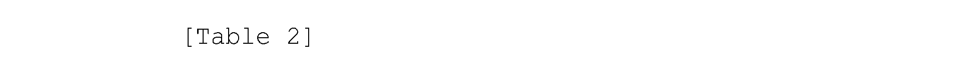

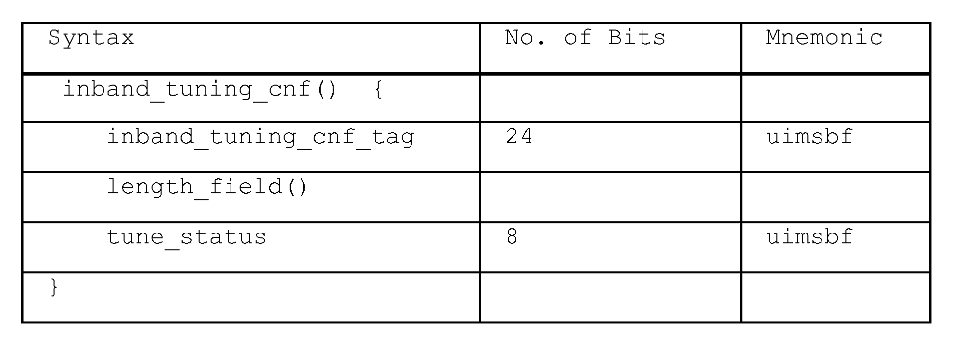

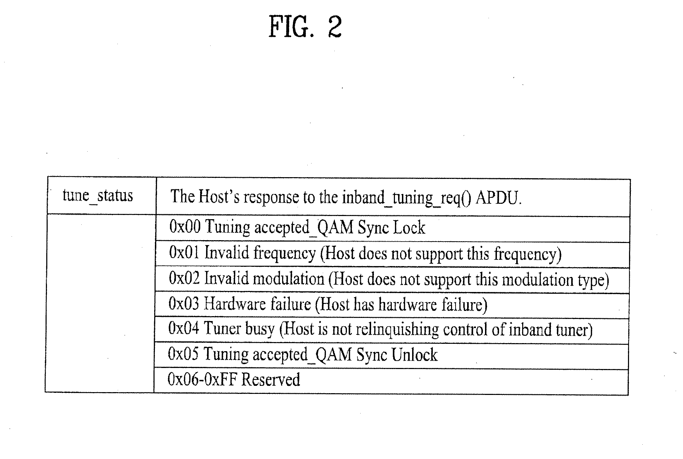

With reference to Table 2, 24 bits are assigned to the "inband_tune_cnf_tag" field, for example, "0x9F8409" may be assigned to the "inband_tune_cnf_tag" field. The "tune_status" field indicates status information of the requested in-band channel, and transmits the result of a channel tuned by the host to a destination. The "tune_status" field of the channels status response message has a variety of values, and a detailed description of the values will hereinafter be described with reference to FIG. 2.

FIG. 2 is a table illustrating a variety of values contained in the "tune-status" field of an in-band channel status response message.

Referring to FIG. 2, the host tunes the corresponding in-band channel according to the channel request message received from the cable card, demodulates the received data using the QAM scheme, and transmits the demodulated result to the cable card.

Subsequently, in order to determine the presence or absence of validity of the demodulated data, the host checks the Sync Lock/Unlock status of the QAM scheme, and displays the checked result on the "tune_status" field of FIG. 2.

If it is determined that the demodulated data has the sync lock status, "0x00" is displayed on the "tune_status" field. Otherwise, if it is determined that the demodulated data has the sync unlock status, "0x05" is displayed on the "tune_status" field.

The above-mentioned sync lock status indicates that the received data is valid. The above-mentioned sync unlock status indicates that the received data is invalid (e.g., no-signal status, or weak signal channel status).

In this case, if the received channel status response message (inband_tune_cnf) has the "0x00" value, the cable card determines that demodulated data of the host is valid, and performs a Transport Stream (TS) decoding operation (i.e., "Tuning granted QAM Sync Lock").

If the "tune_status" field has the "0×05" value, the cable card determines that demodulated data of the host is invalid, does not perform the decoding operation, and requests the tuning of the next Forward Data Channel (FDC) from the host (i.e., "Tuning granted_QAM Sync Unlock"). The "Status_field" value of 0×01 ~ 0×04 indicates that the tuning of the in-band channel has not been executed.

In more detail, if the "tune_status" field value is "0x01", this indicates that the host does not support a transmission channel frequency, as denoted by "Invalid Frequency" in FIG. 2.

If the "tune_status" field value is "0x02", this indicates that the host does not support a modulation scheme of a transmission channel, as denoted by "Invalid modulation" in FIG. 2.

If the "tune_status" field value is "0×03", this indicates that the host does not drive hardware to tune the requested in-band channel, as denoted by "Hardware modulation" in FIG. 2.

If the "tune_status" field value is "0x03", this indicates that the hardware is not driven to tune the requested in-band channel, as denoted by "Hardware failure" in FIG. 2.

If the "tune_status" field is "0x04", this indicates that the tuner is being operated, such that the host is unable to control the requested in-band tuner, as denoted by "Tuner busy" in FIG. 2. If the "tune_status" field is "0×06 ~ 0×FF", this indicates a reserved area.

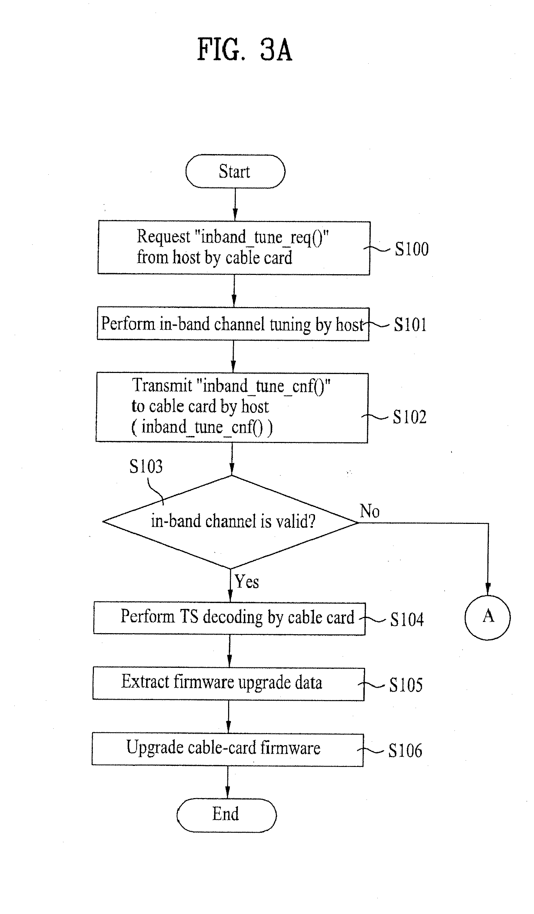

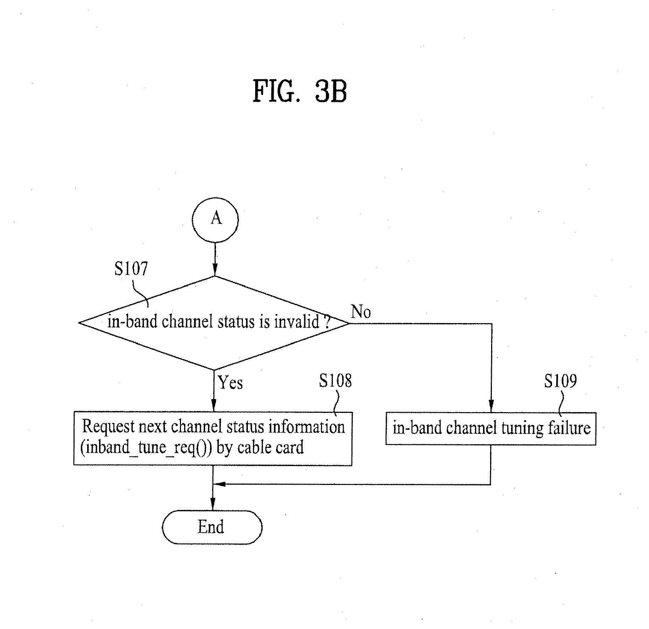

FIGS. 3A~3B are flow charts illustrating a method for interfacing an in-band channel of a broadcast receiver.

Referring to FIGS. 3A~ 3B, during a homing operation for upgrading the firmware of the cable card, the cable card transmits the "inband_tune_req ()" message to the host, and requests the in-band channel tuning from the host at step S100.

Therefore, the host tunes a corresponding Forward Data Channel (FDC) using parameters of the "inband_tune_ req()" message at step S101. The host according to the present application demodulates transmission data of the in-band channel using the QAM scheme, and determines the presence or absence of validity of the demodulated/tuned channel data.

The host displays the result on the "tune_status" field, transmits the demodulated data to the cable card, and at the same time transmits a channel status response message "inband_tune_cnf()" including the "tune_status" field to the cable card at step S102.

If the in-band channel response message is transmitted to the cable card, the cable card receives specific information indicating the presence or absence of validity of the tuned channel data from the in-band channel response message, and is operated according to the received information at step S103.

In this case, if the demodulated in-band channel data is in the QAM sync lock status such that it is considered to be valid data, the cable card performs a Transport Stream (TS) decoding process at step S104, and performs corresponding data at step S105. The cable card upgrades the firmware using the extracted data at step S106.

If the demodulated in-band channel data is indicative of invalid data generated by the QAM sync unlock status at step S107, the cable card requests the next in-band channel tuning from the host without performing the TS decoding process at step S108. If the "tune_status" field has any one of 0x01 ~ 0x04, this indicates that the in-band channel tuning requested by the cable card has failed at step S109.

Therefore, the broadcast receiver determines the presence or absence of data validity, skips over an invalid in-band channel, reduces the number of unnecessary operations of a cable card and the host, increases the lifetime of a system, and detects/decodes only the valid in-band channel, thereby rapidly upgrading firmware.

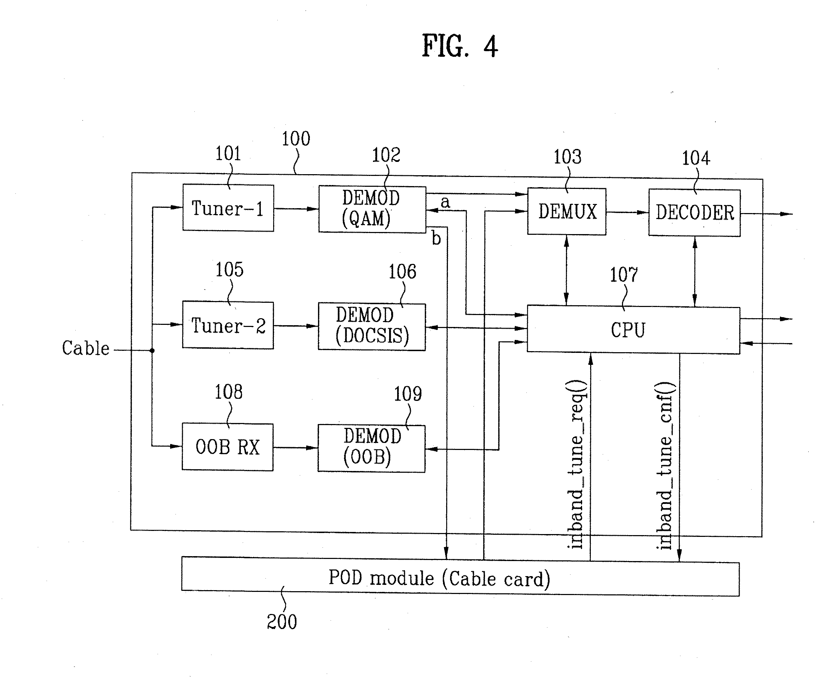

FIG. 4 is a block diagram illustrating a broadcast receiver for interfacing data with an in-band channel according to a preferred implementation of the present application.

Referring to FIG. 4, the first tuner 101 of the host 100 tunes only a specific channel frequency from among terrestrial A/V broadcast data (not shown) transmitted via an antenna or cable A/V broadcast data transmitted via the in-band area, and outputs the tuned result to the first demodulator 102.

In this case, the terrestrial broadcast data and the cable broadcast data have different transmission schemes, such that a demodulation scheme of the first demodulator 102 of the terrestrial broadcast data is different from that of the cable broadcast data.

In other words, the terrestrial A/V broadcast signals are modulated into other signals according to the Vestigial Sideband Modulation (VSB) scheme, such that the modulated result is transmitted to a destination. The cable A/V broadcast signals are modulated into other signals according to the Quadrature Amplitude Modulation (QAM) scheme, such that the modulated result is transmitted to a destination.

Therefore, if the channel frequency tuned by the first tuner 101 is indicative of the terrestrial broadcast data, it is demodulated by the first demodulator 102 according to the VSB scheme. If the channel frequency tuned by the first tuner 101 is indicative of the cable broadcast data, it is demodulated by the first demodulator 102 according to the QAM scheme.

The in-band channel requested by the homing is tuned by the first tuner 101, and is then demodulated by the QAM demodulator 102.

In this case, it is determined whether the demodulated data is valid or not. According to the present invention, if the demodulated data is in the sync lock status, "0x00" is displayed on the "tune_status" field. Otherwise, if the demodulated data is in the sync unlock status, "0x05" is displayed on the "tune_status" field.

The above-mentioned sync lock status indicates that the received data is valid. The above-mentioned sync unlock status indicates that the received data is invalid (e.g., no-signal status, or weak signal channel status).

The demultiplexer 103 separates the multiplexed video signal and the multiplexed audio signal from each other, and outputs the separated signals to the decoder 104. The decoder 104 decompresses the A/V signals compressed by the video decoding algorithm and the audio algorithm, and displays the decompressed A/V signals.

In the meantime, the second tuner 105 tunes a specific channel frequency from among the cable broadcast data transmitted via a cable line according to the DOCSIS Set-Top Gateway scheme, and outputs the tuned result to the second demodulator 106.

The second demodulator 106 demodulates the DSG-based data broadcast signals, and outputs the demodulated signals to the controller 111 denoted by "CPU" in FIG. 4.

The OOB RX 108 is indicative of a third tuner of the present application. The OOB RX 108 tunes a specific channel frequency from among broadcast data transmitted to the OOB via the cable line, and outputs the tuned result to the third demodulator 109.

The third tuner 109 demodulates the received data according to the QPSK scheme, and outputs the demodulated data to the controller (CPU) 107.

The cable card 200 can re-program the firmware. Generally, the firmware is used for the backup of either a flash memory or a RAM battery. The firmware is upgraded by data received from the headend.

The firmware upgrade of the cable card 200 is executed via two schemes, i.e., a first scheme based on the QAM in-band channel of the cable network connected to the headend and a second scheme based on the QPSK OOB- channel or QPSK DSG- channel. The above-mentioned firmware upgrade may be executed by defined data or may also be executed by other methods.

The above-mentioned first scheme based on the QAM in-band channel of the cable network according to the present invention employs a "Delayed Upgrade" method. Therefore, the host must inform the cable card 200 of an upgrade standby mode.

If the host is in the standby mode for a long period of time or detects a memory including a corrupted OS boot loader, the host must immediately perform the upgrade operation. In this case, the cable card 200 transmits the in-band channel request message to the host 100, such that the host tunes the in-band channel by driving the QAM tuner 102.

The homing resources are shown in the following Table 3, and can request detailed services from the host having the cable card of the standby mode. The cable card opens the homing resources during the firmware upgrade or service request operation.

**[Table 3]**

| Resource | Mode | Class | Type | Version | Identifier (hex) |
|---|---|---|---|---|---|
| Homing | | | | | |
| | S-Mode/M-mode | 17 | 1 | 2 | 0x00110042 |

When the matching between the cable card 200 and the host 100 is operated in the in-band channel mode, the cable card 200 transmits the "inband_tune_req()" message acting as an in-band channel request message to the controller 107 of the host.

The controller 107 controls the OOB tuner 101, such that the in-band channel requested by the cable card 200 can be tuned by the OOB tuner 101.

The controller 107 determines the presence or absence of the validity of the in-band channel data tuned/demodulated by the request

The controller 107 displays specific information indicating the presence or absence of data validity on the "tune_status" field of the "inband tune cnf()" message indicating the in-band channel status response message, such that it transmits the validity result to the cable card 200.

The cable card 200 decodes corresponding data by driving the TS decoder on the condition that the demodulated in-band channel data received from the "tune_status" field of the "inband_tune_cnf()" message is valid.

If the firmware of the cable card 200 is upgraded by the decoded data.

If the demodulated in-band channel data received from the "tune_status" field of the "inband_tune_cnf ()" message is invalid, the cable card 200 requests the next in-band channel tuning from the controller 107.

The communication device defined in the above-mentioned description does not additionally include a conventional hardware CAS module in either the subscriber settop box or an integrated-type TV, and downloads a software CAS module provided by an enterprise into the subscriber settop box or the integrated-type TV, such that conventional functions can be normally executed.

For example, according to the method for downloading the soft CAS module, if a security processor built in the settop box is connected to a network, conventional access (CA) images are automatically downloaded from the headend, such that conventional functions can be normally executed.

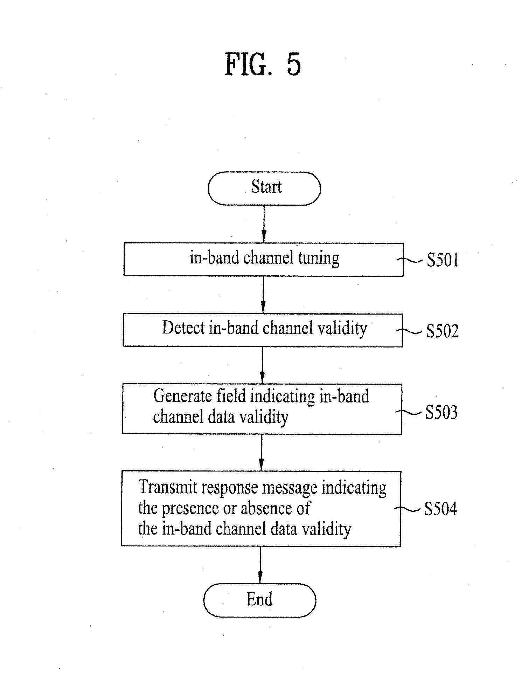

FIG. 5 is a flow chart illustrating a method for processing a broadcast signal according to a preferred implementation of the present application.

Referring to FIG. 5, the broadcast receiver according to the present application receives a tuning request signal of the in-band channel from the host, and tunes the in-band channel at step S501.

If data of the in-band channel is in the sync lock status, the broadcast receiver determines the in-band channel data to be valid data at step S502. Otherwise, if data of the in-band channel is in the sync unlock status, the broadcast receiver determines the in-band channel data to be invalid data at step S502. The broadcast receiver displays specific information indicating the presence or absence of the in-band channel data validity on the tune_status" field at step S503. The in-band channel tuning response message including the "tune_status" field is transmitted to the host at step S504.

It should be noted that most terminology disclosed in the present application is defined in consideration of functions of the present application, and can be differently determined according to intention of those skilled in the art or usual practices. Therefore, it is preferable that the above-mentioned terminology be understood on the basis of all contents disclosed in the present application.

As apparent from the above description, the present application enables a host to include specific information indicating the presence or absence of validity of tuned in-band channel data in a transmission message, thereby reducing the number of unnecessary operations of invalid channels of the cable card.

Therefore, the broadcast receiver determines the presence or absence of data validity, skips over an invalid in-band channel, reduces the number of unnecessary operations of a cable card and the host, increases the lifetime of a system, and detects/decodes only the valid in-band channel, thereby rapidly upgrading firmware.

It will be apparent to those skilled in the art that various modifications and variations can be made in the present application without departing from the spirit or scope of the application. Thus, it is intended that the present application covers the modifications and variations of this application provided they come within the scope of the appended claims and their equivalents.

## Claims

1. A method for interfacing an in-band channel comprising:
requesting a tuning of an in-band channel;
receiving data of the in-band channel tuned/demodulated by the request, and specific information indicating the presence or absence of validity of the in-band channel data; and
performing a decoding process, if the demodulated data is valid by referring to the specific information indicating the validity.

2. The method according to claim 1, further comprising:
requesting a tuning of the next in-band channel instead of the error correction decoding, if the demodulated data is invalid by referring to the specific information.

3. The method according to claim 1, further comprising:
upgrading firmware using the decoded data.

4. A method for interfacing an in-band channel comprising:
receiving a tuning request of an in-band channel;
tuning/demodulating the in-band channel according to the tuning request; and
transmitting data of the demodulated in-band channel and specific information indicating the presence or absence of validity of the demodulated in-band channel data.

5. The method according to claim 4, wherein the specific information indicating the presence or absence of the demodulated in-band channel data is contained in an in-band channel response message, and is then transmitted.

6. The method according to claim 4, wherein the in-band channel is demodulated by a Quadrature Amplitude Modulation (QAM) scheme.

7. The method according to claim 5, wherein:
the in-band channel response message, if the demodulated in-band channel data is in a sync lock status, displays the demodulated in-band channel data as valid data, or
the in-band channel response message, if the demodulated in-band channel data is in a sync unlock status, displays the demodulated in-band channel data as invalid data.

8. A method for interfacing an in-band channel comprising:
requesting, by a cable card, a tuning of an in-band channel from a host;
tuning/demodulating, by the host, the requested Forward Data Channel (FDC), and transmitting the demodulated data and specific information indicating the present invention or absence of validity of the data to the cable card; and
if the demodulated data is valid data on the basis of the specific information indicating the presence or absence of the validity, performing a decoding process by the cable card.

9. The method according to claim 8, wherein:
the cable card, if the in-band channel data is invalid, does not perform the decoding process, and requests a tuning of the next in-band channel from the host.

10. A broadcast receiver comprising:
a cable card for requesting a tuning of an in-band channel, performing a decoding process if data of the in-band channel tuned/demodulated by the request is valid, and requesting a tuning of the next in-band channel if data of the in-band channel tuned/demodulated by the request is invalid; and
a host for performing tuning/demodulating operations of a corresponding in-band channel upon receiving the request from the cable card, and transmitting specific information indicating the presence or absence of the demodulated data to the cable card along with the in-band channel data.

11. The broadcast receiver according to claim 10, wherein the host includes a demodulator for demodulating the tuned in-band channel data using a Quadrature Amplitude Modulation (QAM) scheme.

12. The broadcast receiver according to claim 10, wherein the host includes specific information indicating the presence or absence of validity of the demodulated data in an in-band channel response message, and transmits the in-band channel response message including the specific information to the cable card.

13. The broadcast receiver according to claim 10, wherein the cable card upgrades firmware using the decoded data.

14. A method for processing a broadcast signal comprising:
a) tuning an in-band channel;
b) determining the presence or absence of data validity of the tuned in-band channel;
c) generating a field for indicating the presence or absence of the data validity; and
d) transmitting a response message including the generated field.

15. The method according to claim 14, wherein the step b) for determining the presence or absence of the data validity includes:
if the tuned in-band channel data is in a sync lock status, displaying the in-band channel data as valid data; and
if the tuned in-band channel data is in a sync unlock status, displaying the in-band channel data as invalid data.

16. The method according to claim 14, wherein the data validity of the in-band channel is displayed on a tune status field.
